# EUROPEAN PATENT SPECIFICATION

(11) **EP 2 519 742 B1**
(45) Date of publication and mention of the grant of the patent: **20.08.2014**
(21) Application number: 10844281.5
(22) Date of filing: 29.12.2010
(51) Int. Cl.: F03G 7/04, F03B 17/00

(54) **METHODS AND SYSTEMS FOR POWER GENERATION BY CHANGING DENSITY OF A FLUID**
VERFAHREN UND SYSTEME ZUR ENERGIEERZEUGUNG MITTELS ÄNDERUNG DER DICHTE EINES FLUIDES
PROCÉDÉS ET SYSTÈMES POUR LA GÉNÉRATION D'ÉNERGIE PAR CHANGEMENT DE LA DENSITÉ D'UN FLUIDE

(30) Priority: 29.12.2009 US 290663 P; 14.10.2010 US 393211 P; 29.12.2009 US 290671 P
(43) Date of publication of application: 07.11.2012
(73) Proprietor: Hopper Energy Systems, Inc., Naples, FL 34101 (US)
(72) Inventor: DOROZENSKI, Stephen, Naples FL 34101 (US); HOPPER, Leon, Naples FL 34101 (US); BARNETT, Jeffrey, Naples FL 34101 (US)
(74) Representative: Rooney, John-Paul
(86) International application number: PCT/US2010/062322
(87) International publication number: WO 2011/090739

(56) References cited:
- EP-A1- 1 566 542
- WO-A1-96/36810
- WO-A1-2008/082221
- JP-A- 7 103 127
- JP-A- 2002 371 950
- KR-Y1- 200 394 769
- US-A- 4 233 813
- US-A1- 2003 151 258

## Description

This application claims priority to United States Provisional Patent Application No. 61/290,663 filed on December 29, 2009, United States Provisional Patent Application No. 61/290,671 filed on December 29, 2009, and United States Provisional Patent Application No. 61/393,211 filed on October 14, 2010.

### TECHNICAL FIELD

The subject matter disclosed herein relates to methods and systems of electrical power generation. More specifically, the subject matter disclosed herein relates to power-generating systems and methods based on density changes within fluids utilizing a gas to change the density of the fluid.

### BACKGROUND

New methods of producing electrical power are necessary for ecological, economic, and political reasons. Various renewable energy technologies such as wind, solar, and tidal have not been the answer to the world's current energy challenges as many of these technologies have inherent disadvantages. Current forms of energy production that use fossil fuels have well-documented limitations, including finite supplies and the release of green house gasses that impact the environment.

Non-fossil fuel source energy production technologies such as nuclear, geothermal, and hydrodynamic also have limitations such as where those technologies can be physically located, high capital investment costs, and negative environmental impacts.

It is known that mechanical energy from the motion of one of the forms of matter (solid, liquid, gas, or plasma) can be converted into electrical energy through an appropriate manner, such as a generator or magnetic induction system. The source mechanical energy is typically derived from 1) the conversion of the chemical energy in naturally occurring fossil fuels or manmade biofuels via combustion, 2) heat derived from nuclear reaction processes, or 3) the natural motion of water due to gravity, waves, or tidal forces.

Examples of commonly known energy production sources include fossil fuels such as coal, oil, natural gas, and shale, manmade biofuels, hydrodynamic dams including tidal designs, solar, wind, geothermal, and nuclear sources.

In sum, each of these methods of energy production has various advantages and disadvantages. Accordingly a manner of energy production that addresses these disadvantages, while maintaining the advantages associated therewith, is desired.

WO 2008/082221 A1, upon which the pre-characterising portion of the independent claims are based, discloses a device for generating electricity using buoyancy. WO 96/36810 A1, and EP 1,566,542 A1 disclose systems for generating power using buoyancy.

### SUMMARY

There is provided an apparatus and a method according to the appended claims.

This Summary is provided to introduce a selection of concepts in a simplified form that are further described below in the Detailed Description of Illustrative Embodiments. This Summary is not intended to identify key features or essential features of the claimed subject matter, nor is it intended to be used to limit the scope of the claimed subject matter.

Disclosed herein is an apparatus that includes an object for being placed in a fluid having a first density. An energy generator is coupled to the object and configured for generating energy upon translation of the object. A gas injector is provided for injecting gases into the fluid to lower the density thereof to a second density that is less than the density of the object and thereby induce buoyancy-dependent translation of the object to generate energy by the energy generator.

According to another embodiment, an apparatus is provided that includes an object coupled to a pivot and configured for being placed in a fluid. An electrical generator is coupled to the object and configured for generating electricity upon pivoting translation of the object about the pivot. A gas injector is provided for injecting gases into the fluid to lower the density thereof to less than the density of the object and thereby induce pivoting translation of the object about the pivot to generate electricity by the electrical generator.

According to another embodiment, an apparatus is provided. The apparatus includes a first object coupled to a pivot and configured for being placed in a first portion of fluid. A second object is coupled to the pivot and configured for being placed in a second portion of fluid. The second object is coupled to the first object such that movement of the first object imparts a corresponding movement to the second object. An electrical generator is coupled to the pivot and configured for generating electricity upon pivoting translation of the first object and second object about the pivot. A gas injector is in communication with the first portion of fluid for injecting gases into the first portion of fluid to lower the density thereof to less than the density of the first object and thereby induce pivoting translation of the first object about the pivot to generate electricity by the electrical generator.

According to another embodiment, an apparatus is provided and includes a plurality of equally spaced-apart objects. Each respective object is carried by a support extending from a central pivot and is coupled thereto such that movement of at least one of the objects imparts a corresponding movement to the other of the at least one objects. The at least one of the objects is initially positioned in a first portion of fluid separate from at least a second portion of fluid in which the other of the at least one objects is initially position within. An electrical generator is coupled to the pivot and configured for generating electricity upon pivoting translation of the plurality of equally spaced-apart objects about the pivot. A gas injector is provided for injecting gases into the first portion of fluid to lower the density thereof to less than the density of the at least one of the objects and to thereby induce pivoting translation of the at least one of the objects about the pivot to generate electricity by the electrical generator.

According to another embodiment, the apparatus may further include a barrier separating a first portion of fluid from a second portion of fluid.

According to another embodiment, the barrier may define an aperture for allowing an object to pass therethrough.

According to another embodiment, the energy generator produces energy upon reciprocal movement of the pivot.

According to another embodiment, the energy generator is an electrical generator.

According to another embodiment, the apparatus further includes a flow meter in communication with the low-density fluid injector.

According to another embodiment, the low-density fluid injector is a gas injector.

According to another embodiment, the gas injector injects carbon dioxide.

According to another embodiment, the low-density fluid injector defines baffles to disperse and separate injected fluids.

According to another embodiment, the energy generator is in communication with an energy storage device for storing generated energy.

According to another embodiment, the energy generator is in communication with an energy distribution grid.

According to another embodiment, an apparatus is provided. The apparatus includes a plurality of equally spaced-apart objects. Each respective object is carried by a support extending from a central pivot and being coupled thereto such that movement of at least one of the objects imparts a corresponding movement to the other of the at least one objects. The at least one of the objects is initially positioned in a first portion of fluid separate from at least a second portion of fluid in which the other of the at least one objects is initially position within. An electrical generator is coupled to the pivot and configured for generating electricity upon pivoting translation of the plurality of equally spaced-apart objects about the pivot. Means for lowering the density of the fluid in the first portion to less than the density of the object and thereby induce pivoting translation of the object about the pivot to generate electricity by the electrical generator are provided.

According to another embodiment, the means for lowering the density of the fluid include low-density fluid injection, gas injection, and hot fluid injection.

According to another embodiment, the means for lowering the density of the fluid include imparting vibratory movements to a surface to create air-encapsulated dispersions within the fluid.

According to another embodiment, an apparatus is provided and includes a first object coupled to a pivot and configured for being placed in a fluid. An electrical generator is coupled to the pivot and configured for generating electricity upon pivoting translation of the first object about the pivot. A gas injector is provided in communication with the fluid for injecting gases therein to lower the density thereof to less than the density of the first object and thereby induce pivoting translation of the first obj ect about the pivot to generate electricity by the electrical generator.

According to another embodiment, the fluid defines a first portion and a second portion, and the first object is placed in the first portion of the fluid.

According to another embodiment, the first object is carried on a first end of a lever, and the is being coupled to the pivot.

According to another embodiment, the apparatus includes a second object that is carried on a second end of the lever. The second object is placed in the second portion of the fluid.

According to another embodiment, the first portion and the second portion are separated therebetween by a divider wall.

According to another embodiment, the pivot is carried by the divider wall.

According to another embodiment, the gas injector injects carbon dioxide gases into the fluid.

According to another embodiment, the gas injector injects gases into the first portion of the fluid.

According to another embodiment, an air separator is carried in the first portion for separating gases.

According to another embodiment, the first object and the second object generally approximate a prolate spheroid.

According to another embodiment, an apparatus is provided. The apparatus includes a chamber for containing a fluid and an object for being placed in the fluid. An electrical generator is configured for generating electricity upon translation of the object. A gas injector is provided in communication with the chamber for injecting gases into the fluid to lower the density thereof to less than the density of the object to thereby induce buoyancy-dependent translation of the object to generate electricity by the electrical generator.

According to another embodiment, the electrical generator is coupled to the object by a cable.

According to another embodiment, the electrical generator is positioned outside of the chamber.

According to another embodiment, any of the apparatus may be part of an energy generating system including a fluid source, energy storage devices, or energy consuming devices.

According to another embodiment, the object has a lower density than the natural density of the fluid.

According to another embodiment, the electrical generator is coupled to the object by a shaft configured for rotational movement upon buoyancy-dependent translation of the object.

According to another embodiment, the shaft defines a threaded portion on an outside thereof and the object defines an internal threaded void for receiving the threaded portion of the shaft.

According to another embodiment, the apparatus includes a geared assembly coupled to the shaft for imparting rotational movement to the electrical generator.

According to another embodiment, the electrical generator includes at least one magnet carried by the object and at least one induction coil carried by the chamber.

According to another embodiment, the at least one magnet includes a plurality of magnets, and further wherein, the plurality of magnets are placed in spaced-apart series about the object.

According to another embodiment, the at least one induction coil is carried along a length of the chamber.

According to another embodiment, the electrical generator includes at least one magnet carried by the chamber and at least one induction coil carried by the object.

According to another embodiment, the at least one magnet includes a plurality of magnets, and further wherein, the plurality of magnets are placed in spaced-apart series about the chamber.

According to another embodiment, the at least one induction coil is carried along a length of the object.

According to another embodiment, an apparatus for generating energy in a fluid is provided. The apparatus includes a plurality of radially spaced-apart paddles having a generally parabolic shape and being interconnected by a panel that is configured for pivotable movement about a pivot. Each paddle generally defines a leading, concave portion thereof and a trailing, convex portion thereof. A low-density fluid injector is defined medially between consecutively spaced-apart paddles for injecting low-density fluid therebetween such that low-density fluids are injected on the leading, concave portion of one half of the panel to thereby reduce the density of the fluids about the leading, concave portion of each paddle to impart buoyancy-dependent translation of the panel about the pivot.

According to another embodiment, a method for generating energy is provided. The method includes providing an object in a fluid having a first density. The object is in engagement with an energy generator configured for generating energy upon translation of the object. The method also includes reducing the density of the fluid in order to impart buoyancy-dependent translation of the object in the fluid and generate energy by the energy generator and capturing energy generated by the energy generator.

According to another embodiment, a method of generating energy is provided. The method includes providing a first object in a first portion of fluid having a first density, injecting low-density fluids into the first portion of fluid in order to reduce the density thereof to less than the density of the first object and thereby induce buoyancy-dependent translation of the first object in response thereto, and generating energy based upon buoyancy-dependent translation of the first object.

According to another embodiment, placing a first object in a first portion of fluid includes placing the first object in a first position in the first portion of the fluid.

According to another embodiment, injecting low-density fluids into the first portion of the fluid includes injecting low-density fluids to induce buoyancy-dependent translation of the first object into a second position in the first portion of the fluid.

According to another embodiment, the method may further include allowing the density of the first portion of fluid to return to the first density to thereby induce buoyancy-dependent translation of the first object from the second position to the first position, and further including generating energy upon translation of the first object from the second position to the first position.

### BRIEF DESCRIPTION OF THE DRAWINGS

The foregoing summary, as well as the following detailed description of preferred embodiments, is better understood when read in conjunction with the appended drawings. For the purposes of illustration, there is shown in the drawings exemplary embodiments; however, the presently disclosed invention is not limited to the specific methods and instrumentalities disclosed. In the drawings:
FIG. 1 depicts a flow chart illustrating one or more steps that may be performed according to a method disclosed herein;
FIG. 2 depicts a schematic diagram of a system for generating energy according to one or more embodiments of the present invention;
FIG. 3 depicts a system for generating energy according to one or more embodiments of the present invention;
FIG. 4 depicts a system for generating energy according to one or more embodiments of the present invention;
FIG. 5 depicts an apparatus for generating energy according to one or more embodiments of the present invention;
FIG. 6 depicts an apparatus for generating energy according to one or more embodiments of the present invention;
FIG. 7 depicts an apparatus for generating energy according to one or more embodiments of the present invention;
FIG. 8 depicts an apparatus for generating energy according to one or more embodiments of the present invention;
FIG. 9 depicts an apparatus for generating energy according to one or more embodiments of the present invention; and
FIG. 10 depicts an apparatus for generating energy according to one or more embodiments of the present invention.

### DETAILED DESCRIPTION

The presently disclosed invention is described with specificity to meet statutory requirements. However, the description itself is not intended to limit the scope of this patent. Rather, the inventors have contemplated that the claimed invention might also be embodied in other ways, to include different steps or elements similar to the ones described in this document, in conjunction with other present or future technologies. Moreover, although the term "step" may be used herein to connote different aspects of methods employed, the term should not be interpreted as implying any particular order among or between various steps herein disclosed unless and except when the order of individual steps is explicitly described.

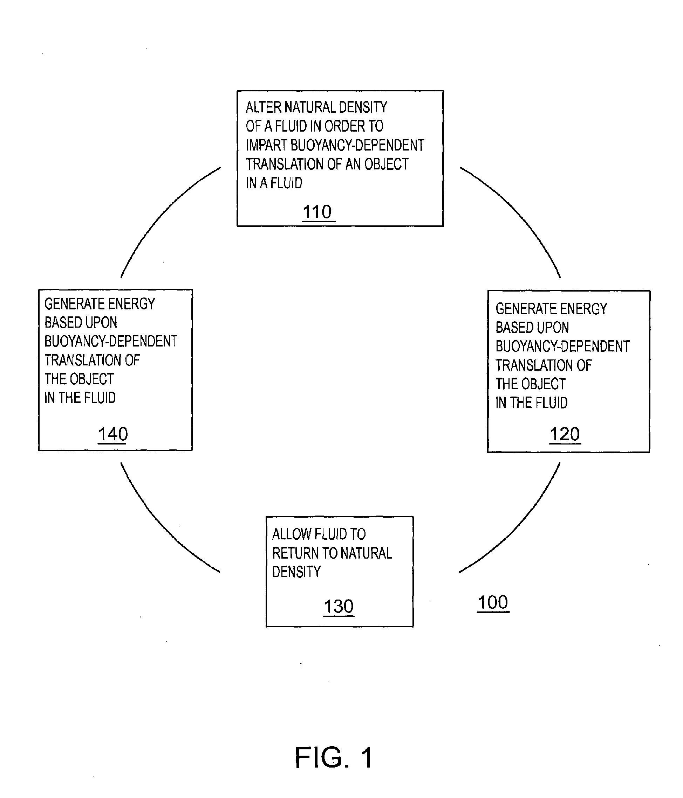

Methods, apparatuses, and systems for converting buoyancy-dependent translation into energy are provided herein. In one or more embodiments, the methods, apparatuses, and systems of the presently disclosed subject matter are provided for converting buoyancy-dependent translation of an object positioned within a fluid into energy. A flow chart depicting one or more steps of the methods of converting buoyancy-dependent translation of an object into energy 100 is presented in FIG. 1. The method 100 includes altering the density of a fluid in order to impart buoyancy-dependent translation of an object in the fluid 110 in which the density of the fluid is altered to be less than the density of the object such that the object begins to translate in a generally downward direction. The object could be a first of many objects or a stand-alone object and could be placed in a first portion of a fluid. Implementation of the methods disclosed herein will be discussed in regards to various systems and apparatuses also disclosed herein, in which reference may be made to low-density fluid injection as one manner of altering the density of a liquid in order to impart buoyancy-dependent translation of an object. Injection of low-density fluids into a first portion of the fluid is one example of a manner of altering the density of a liquid, but other methods and manners are equally applicable and intended to be incorporated with the various systems and apparatuses disclosed herein. For example, altering the density of a liquid may include imparting a temperature change to a portion of fluid, injection of solid or semi-solid matter into a fluid, or imparting vibrational movement to a portion of fluid.

Energy is then generated based upon the buoyancy-dependent translation of the object in the fluid 120. The density of the fluid is then allowed to return to the natural density thereof 130. This return to natural density may be effectuated by, for example, the escape of low-density fluid bubbles such as gaseous bubbles into the surrounding environment or may be effectuated in response to some action by another system or apparatus. Energy may then be generated based upon the buoyancy-dependent translation of the object as the fluid returns to normal density 140. In this manner, the object may have a first position in which the object is suspended, emulsed, or floating within the fluid, and a second position which generally corresponds to the position of the object after the step of altering the natural density of a fluid in order to impart buoyancy-dependent translation of an object in a fluid 110. In the step generally corresponding to allowing the fluid to return to natural density 130 and generating energy based upon buoyancy-dependent translation of the object in the fluid 140, the object returns to the first position. As described herein, altering the natural density of a fluid may include reducing the density by injecting a low-density fluid into the fluid, or may, in alternate embodiments, include providing ultrasonic or other vibratory methods of creating low-density fluid voids within the fluid for reducing the density thereof. Still in other embodiments, this may be effectuated by harnessing natural gas expulsions from a natural source, such as an ocean floor. Each of those manners of reducing the density of the fluid in which the object is placed may be used in conjunction with any of the systems or apparatuses disclosed herein. These embodiments are provided as non-limiting examples, though it is envisioned that other manners of effectuating the same are encompassed within this description.

The term "object" is meant to include, but not be limited to, a single object, a plurality of objects, a device, or a plurality of devices moving through a fluid as described below. The movement of an object is also meant to include, but not be limited to, embodiments where the fluid and container holding the fluid are fixed, for example, fastened to a surface, and the object moves through the surrounding fluid, and embodiments where the object passing through the surrounding fluid in the previous embodiment is fixed, for example, fastened to a surface, and the fluid and container move around the object. For purposes of non-limiting description and illustration, embodiments described herein will describe embodiments where an object passes through a fluid held in a container.

It should be understood to those of skill in the art that embodiments are envisioned where the natural density of the object is less than or equal to the natural density of the surrounding fluid, and also embodiments where the natural density of the object is greater than the natural density of the surrounding fluid. For purposes of non-limiting description and illustration, the embodiments described herein will assume the object has a natural density less than or equal to the surrounding fluid.

In addition to varying the density of the surrounding fluid, the density of an object moving through the fluid can be varied to create a difference in the relative densities of the fluid and object. By way of non-limiting examples, a gas or other fluid can be injected into the interior of the object to increase its buoyancy, or non-gaseous matter (e.g. the surrounding fluid) can fill the interior of the object to decrease its buoyancy. In certain embodiments, the natural density of the fluid may be greater than the object, and in other embodiments the initial density of the fluid may be less than the object. In some embodiments, creating the largest density difference is advantageous as it creates the largest potential energy possible, and subsequently the largest kinetic energy possible when the subject matter disclosed herein is practiced. By varying the relative density of the object and surrounding fluid such that the density of the object is alternately less than and greater than the fluid, a cyclical pattern of motion of the object through the surrounding fluid is created. Appropriate suitable processes and/or systems can then be used to convert the kinetic energy of the object into electricity.

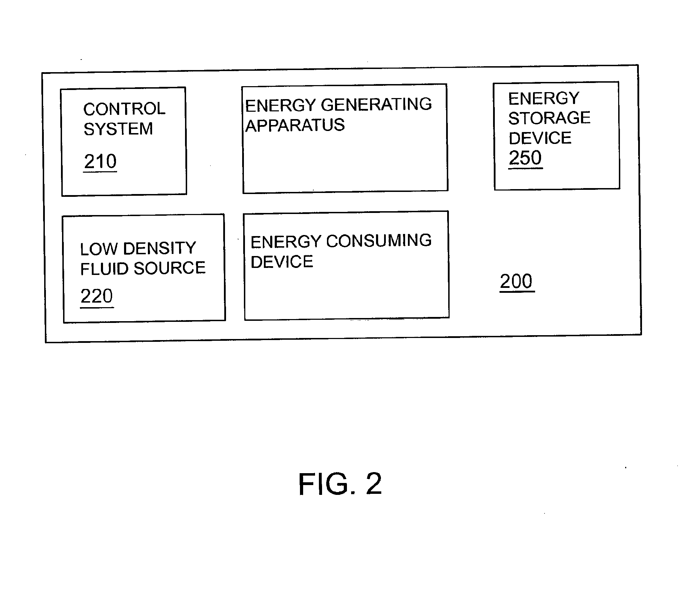

A system for converting buoyancy-dependent translation of an object into energy is depicted in FIG. 2. The system 200 may generally include a control system 210 that is configured for dispensing a low-density fluid source 220. An energy generating apparatus is in communication with the control system 210 and the low-density fluid source 220. Various embodiments of the energy generating apparatus are depicted throughout the drawings. An energy consuming device or system may also be in communication with the energy generating apparatus for consuming energy generated thereby. Additionally, an energy storage device 250 may be provided for storing energy generated by the energy generating apparatus. The energy storage device 250 may be provided for any suitable form of energy storage, and may include battery cells or other chemical storage devices, electrical capacitors, supercapacitors, or magnetic energy storage, mechanical manners, thermal, or the like.

The methods, apparatuses, and systems of the presently disclosed subject matter are configured for use with the low-density fluid source 220, which may, in one or more embodiments, be a fluid source from a manufacturing or industrial facility. These facilities could include any facility that outputs some low-density fluid as a by-product. Examples of low-density fluids may include exhaust gases such as carbon dioxide that are exhausted from various industrial processes, or low-density fluids such as hot water. As used herein, "low-density" refers to a fluid having a density that is lower than the density of a body of fluid in which an object is placed in for use with any one of the energy generating apparatuses. While any appropriate fluid such as gas or a mixture of gases may be used, examples of gases that may be utilized include carbon dioxide, air, nitrogen, and gaseous products resulting from the combustion of fossil fuels, biofuels, or other carbon containing material.

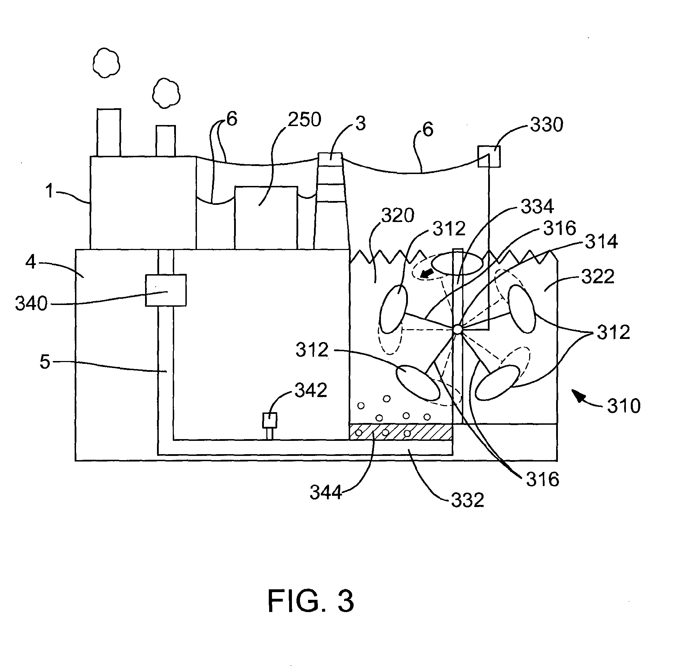

One example of an energy generating apparatus according to one or more embodiments of the presently disclosed subject matter is illustrated in FIG. 3 in which a production facility 1 could be used in combination with the methods, apparatuses, and systems of the presently disclosed subject matter. The production facility 1 may be a coal, nuclear, or other power plant, or may be any suitable industrial facility that has low-density fluid as a by-product. The facility 1 may include the external energy storage device 250. The energy storage device 250 may be connected with an energy transmission line such as a power line 6 to a power line support 3.

The facility 1 may be positioned on a nearby ground structure 4. Piping 5 or other appropriate devices may be provided for transporting a low-density fluid from the facility 1 to a first portion of fluid 320. A pump 340 may be provided for providing pumping forces to pump the low-density fluid from the facility 1 to the body of fluid 320. A flow meter 342 may be provided in communication with the piping 5 for monitoring the amount of low-density fluid that flows therethrough.

A fluid injector 332 may be provided in communication with the piping 5 and is positioned proximal a first portion of fluid 320. In one or more embodiments, the fluid may be an appropriate liquid such as water, but may be any other suitable liquid. The injector 332 may be any suitable injector configured to release low-density fluid into the first portion of fluid 320. A baffle 344 or other manner of separating low-density fluid into more finely dispersed fluid may be provided for increasing the speed at which the low-density fluid intermixes with the first portion of fluid 320. In this manner, as the low-density fluid intermixes with the first portion of fluid 320, the relative density of the first portion of fluid 320 decreases. In other words, the altered density of the first portion of fluid 320 decreases to less than the natural density thereof. As used herein, the natural density of a fluid describes the density of a fluid at a selected temperature and pressure. For example, the natural density of water at about 22 degrees Celsius is about 998 kilograms per meters cubed. Water containing amounts of other substances, such as salt, may have different natural densities.

An apparatus for use with the facility 1 as described herein is generally designated in FIG. 3 as 310. The apparatus 310 includes a plurality of spaced-apart objects 312. Each object 312 may have a generally prolate spheroid shape, and in one or more embodiments, may define a volume therein so that portions of each object 312 are hollow, or, each object 312 may be a homogenous or heterogeneous construction. Each object 312 is carried by a support 316 that extends from a central pivot 314. Each object 312 may be equally spaced-apart from each successive object 312 as shown in the drawings, or the spacing between successive objects 312 may be varied according to one or more embodiments. The central pivot 314 may be configured such that rotational movement of any one object 312 imparts equal and corresponding movement to each of the other objects 312. The central pivot 314 may be carried by a solid density barrier 334 that acts to separate the first portion of fluid 320 from a second portion of fluid 322. The solid density barrier 334 may also be referred to herein as a divider wall. Each object 312 may be provided in either of the first portion of fluid 320 or the second portion of fluid 322. In this manner, the solid density barrier 334 acts to separate the first portion of fluid 320 from the second portion of fluid 322 so that each respective portion may have a density that differs from the other portion. The solid density barrier 334 may further include a cutout portion for allowing the objects 312 and supports 316 to pass therethrough. Accordingly, as low-density fluid is injected from the gas injector 332 into the first portion of fluid 320, the density of the first portion of fluid 320 is reduced when compared to the natural density of the fluid, whereas the density of the second portion of fluid 322 remains relatively the same as the natural density of the fluid since the solid density barrier 334 maintains separation from the first portion of fluid 320 and the second portion of fluid 322.

As the density of the first portion of fluid 320 decreases due to the injection of low-density fluid from the injector 332, the buoyant-dependent forces imparted to each object 312 located in the first portion of fluid 320 decreases. If the density of the first portion of fluid 320 becomes less than the density of each object 312, then each object 312 begins to translate downwardly or "sink" within the first portion of fluid 320. Broken lines are used throughout the drawings to illustrate an object 312 that has translated due to a decrease in the density of the fluid that the object is contained within. Since each object 312 is coupled to a pivot 314, each of the objects 312 begins to pivot thereabout and the entire collection of the plurality of objects 312 begins to rotate in a counter-clockwise direction as shown in FIG. 3. The rotation of the plurality of objects 312 continues until the density within the first portion of fluid 320 returns to its natural density after the cessation of low-density fluid being injected into the first portion of fluid 320.

The pivot 314 may be coupled to a generator 330 that may then be in communication with the power transmission lines 6 and the facility 1, or alternatively, the energy storage device 250. The generator 330 may be configured for converting pivoting or rotational movement of the pivot 314 into electrical energy. This may be done in any manner of ways known to those skilled in the art.

While only one apparatus 310 may be shown in FIG. 3, it may be possible to have multiple apparatuses aligned in series or parallel for increased energy generation. For example, multiple sets of objects 312 carried by supports 316 extending from a central pivot 314 may be provided. Similarly, multiple apparatuses as shown in any of the one or more embodiments disclosed herein may be aligned in series or parallel for increased energy generation.

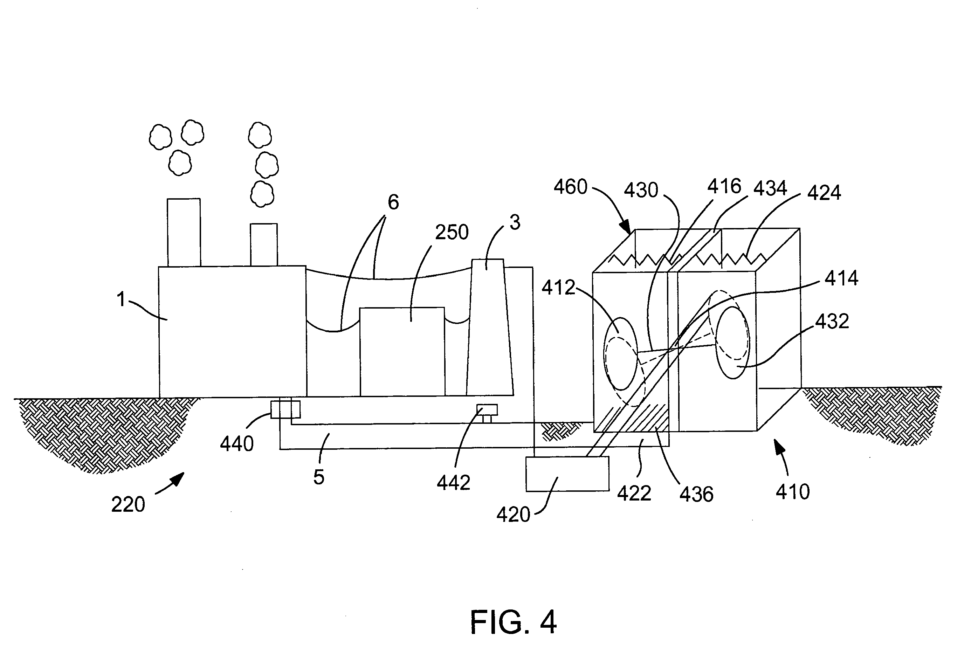

One or more embodiments according to the presently disclosed invention are depicted in FIG. 4 in which the facility 1 cooperates with an apparatus 410 for producing energy. The facility 1 is similarly coupled to energy storage device 250 and power transmission line support 3 by power transmission lines 6. A pump 440 may provide pumping forces to pump a low-density fluid through pipe 5. A flow meter 442 may be provided in communication with the pipe 5 for varying the flow of low-density fluid. A fluid injector 422 may be provided on an end of the pipe 5 for injecting low-density fluids into a first portion of fluid 416. A baffle or other type of fluid separator 436 may be provided about the outlet of the fluid injector 422 for dispersing low-density fluid. The apparatus 410 includes a first object 412 in the first portion of fluid 416 carried by a support 430 that extends from a pivot 414 that may be carried by a density barrier 434 for separating the first portion of fluid 416 from a second portion of fluid 424 in which a second object 432 is carried by the support 430 extending from the pivot 414. The pivot 414 is coupled to an electric generator 420 similar to generator 330 as disclosed in FIG. 3.

The apparatus 410 is configured for back and forth reciprocating movement in which the first object 412 translates downwardly when low-density fluid is injected into the first portion of fluid 416 and the density thereof is reduced to less than the density of the first object 412. The apparatus 410 may be configured such that intermittent applications of low-density fluid are injected into the first portion of fluid 416 such that enough low-density fluid is first injected into the first portion of fluid 416 until the first object 412 pivots counter-clockwise until almost reaching the density barrier 434. At that point, low-density fluid is no longer injected into the first portion of fluid 416 and the density begins to return to the natural density thereof. As this occurs, the first object 412 pivots clockwise until the relative vertical positioning is generally the same as that of the second object 432.

In one or more embodiments, a low-density injector may be provided at both the first portion of fluid 416 and the second portion of fluid 424 such that alternating, intermittent injections of low-density fluid can be made in each respective portion of fluid.

As illustrated in FIG. 4, the apparatuses for generating energy disclosed herein may be self contained in a stand-alone container 460 or may be part of a natural environment such as an ocean, lake, or other body of water as depicted in FIG. 3.

As illustrated in the block generally relating to the step of generating energy based upon buoyancy-dependent translation of the object in the fluid 140, such a step may be encompassed by the apparatus 410. For example, as the first portion of fluid 416 returns to its natural density, the first object 412 will begin to undergo buoyancy-dependent translation in a generally upwards direction until the object 412 is in general alignment with the second object 432. In this manner, energy generation may be effectuated during generally upwards translation of the apparatus 410 as the first portion of fluid 416 returns to its natural density.

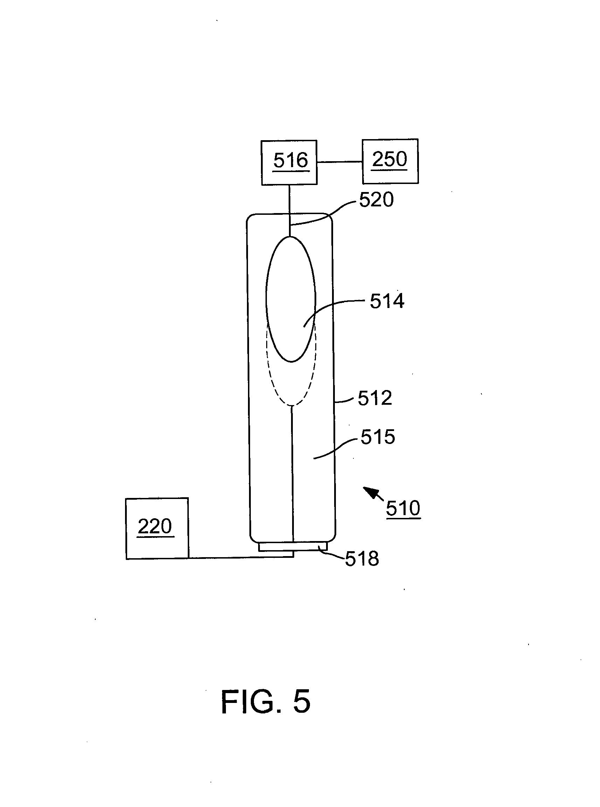

An apparatus for generating electricity according to one or more embodiments of the disclosed subject matter is illustrated in FIG. 5 and is generally designated 510. The apparatus 510 may be in communication with a low-density fluid injector 518 that is in communication with the low-density fluid source 220. The apparatus 510 includes a chamber 512 that is configured for containing a fluid 515 therein. An object 514 is provided within the fluid 515 and is further coupled to an electrical generator 516 that is configured for generating electrical energy upon translation of the object 514. The object 514 is coupled to the electrical generator 516 by a linking member 520, which may be a cable, support rod, or similar structure. The electrical generator 516 may then be coupled to the energy storage device 250 for storing energy generated thereby. In other embodiments, the electrical generator 516 may be coupled directly with an energy consuming appliance or device.

The apparatus 510 is configured such that the object 514 has a density that is less than or equal to the natural density of the fluid 515 contained within the chamber 512. In this manner, the object 514 generally floats or is suspended within the fluid 515 when the fluid 515 is at natural density. As low-density fluid is injected into the chamber 512 by the injector 518, the object 514 will then begin to translate downwardly once the density of the fluid 515 is less than that of the object 514. As the object 514 translates downwardly, the linking member 520 will impart movement to the generator 516, thereby generating electrical energy. Low-density fluid may continue to be injected into the chamber 512 until the object 514 reaches a desired downward position. At that point, low-density fluid is no longer injected and the fluid 515 begins to return to its natural density. As this occurs, the object 514 will begin to translate upwardly to its initial position. Once the object 514 returns to its initial position, the low-density fluid injection process can be initiated again.

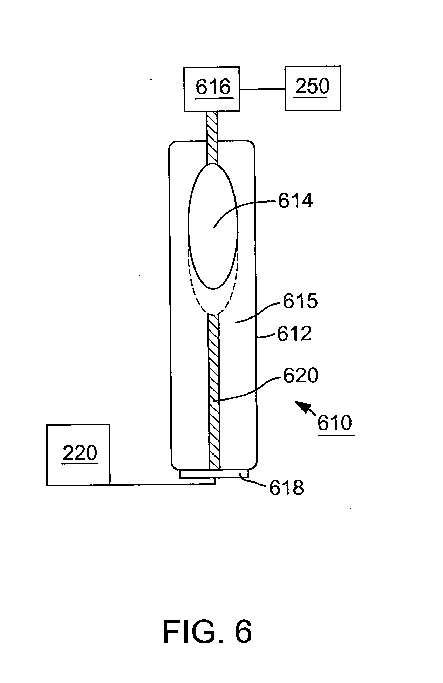

An apparatus for generating electricity according to one or more embodiments of the disclosed subject matter is illustrated in FIG. 6 and is generally designated 610. The apparatus 610 may be in communication with a low-density fluid injector 618 that is in communication with the low-density fluid source 220. The apparatus 610 includes a chamber 612 that is configured for containing a fluid 615 therein. An object 614 is provided within the fluid 615 and is threadably received within a shaft 620. The shaft 620 is further coupled to an electrical generator 616 that is configured for generating electrical energy upon rotation of the shaft 620. The shaft 620 is configured for rotational movement as the object 614 translates upwardly and downwardly due to buoyancy-dependent translation thereof. This may be accomplished by affixing the object 614 to a wall of the chamber 612 such that the rotational arrangement of the object 614 remains the same as the object 614 translates vertically. The electrical generator 616 may then be coupled to the energy storage device 250 for storing energy generated thereby. In other embodiments, the electrical generator 616 may be coupled directly with an energy consuming appliance or device.

The apparatus 610 is configured such that the object 614 has a density that is less than or equal to the natural density of the fluid 615 contained within the chamber 612. As low-density fluid is injected into the chamber 612, the object 614 will then begin to translate downwardly once the density of the fluid 615 is less than that of the object 614. As the object 614 translates downwardly, the shaft 620 rotates and imparts corresponding rotational movement to the generator 616, thereby generating electrical energy. Low-density fluid may continue to be injected into the chamber 612 until the object 614 reaches a desired downward position. At that point, low-density fluid is no longer injected and the fluid 615 begins to return to its natural density. As this occurs, the object 614 will begin to translate upwardly to its initial position. Once the object 614 returns to its initial position, the low-density fluid injection process can be initiated again.

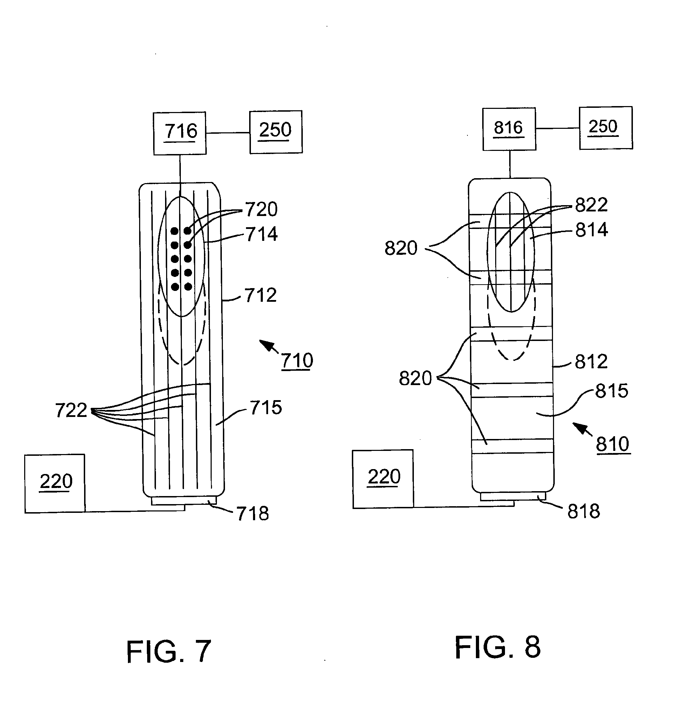

An apparatus for generating electricity according to one or more embodiments of the disclosed subject matter is illustrated in FIG. 7 and is generally designated 710. The apparatus 710 may be in communication with a low-density fluid injector 718 that is in further communication with the low-density fluid source 220. The apparatus 710 includes a chamber 712 that is configured for containing a fluid 715 therein. An object 714 is provided within the fluid 715 and is configured for vertical buoyancy-dependent translation. The object 714 defines at least one magnet 720 on a surface thereof. Each of the magnets 720 are configured for induction energy generation upon translation about induction coils 722 defined on a surface of the chamber 712. An electrical transformer 716 may then be provided for converting the induction charges into a useable form of electricity. The electrical transformer 716 may then be coupled to the energy storage device 250 for storing energy generated thereby. In other embodiments, the electrical transformer 716 may be coupled directly with an energy consuming appliance or device.

The apparatus 710 is configured such that the object 714 has a density that is less than or equal to the natural density of the fluid 715 contained within the chamber 712. As low-density fluid is injected into the chamber 712, the object 714 will then begin to translate downwardly once the density of the fluid 715 is less than that of the object 714. As the object 714 translates downwardly, the induction energy is created by the passing of the magnets 720 by the coils 722. Low-density fluid may continue to be injected into the chamber 712 until the object 714 reaches a desired downward position. At that point, low-density fluid is no longer injected and the fluid 715 begins to return to its natural density. As this occurs, the object 714 will begin to translate upwardly to its initial position. Once the object 714 returns to its initial position, the low-density fluid injection process can be initiated again.

An apparatus for generating electricity according to one or more embodiments of the disclosed subject matter is illustrated in FIG. 8 and is generally designated 810. The apparatus 810 may be in communication with a low-density fluid injector 818 that is in further communication with the low-density fluid source 220. The apparatus 810 includes a chamber 812 that is configured for containing a fluid 815 therein. An object 814 is provided within the fluid 815 and is configured for vertical buoyancy-dependent translation. The object 814 defines at least one induction coil 822 on a surface thereof. Each of the induction coils 822 are configured for induction energy generation upon translation about magnets 820 defined on a surface of the chamber 812. An electrical transformer 816 may then be provided for converting the induction charges into a useable form of electricity. The electrical transformer 816 may then be coupled to an energy storage device 250 for storing energy generated thereby. In other embodiments, the electrical transformer 816 may be coupled directly with an energy consuming appliance or device.

The apparatus 810 is configured such that the object 814 has a density that is less than or equal to the natural density of the fluid 815 contained within the chamber 812. As low-density fluid is injected into the chamber 812, the object 814 will then begin to translate downwardly once the density of the fluid 815 is less than that of the object 814. As the object 814 translates downwardly, the induction energy is created by the passing of the magnets 820 by the coils 822. Low-density fluid may continue to be injected into the chamber 812 until the object 814 reaches a desired downward position. At that point, low-density fluid is no longer injected and the fluid 815 begins to return to its natural density. As this occurs, the object 814 will begin to translate upwardly to its initial position. Once the object 814 returns to its initial position, the low-density fluid injection process can be initiated again.

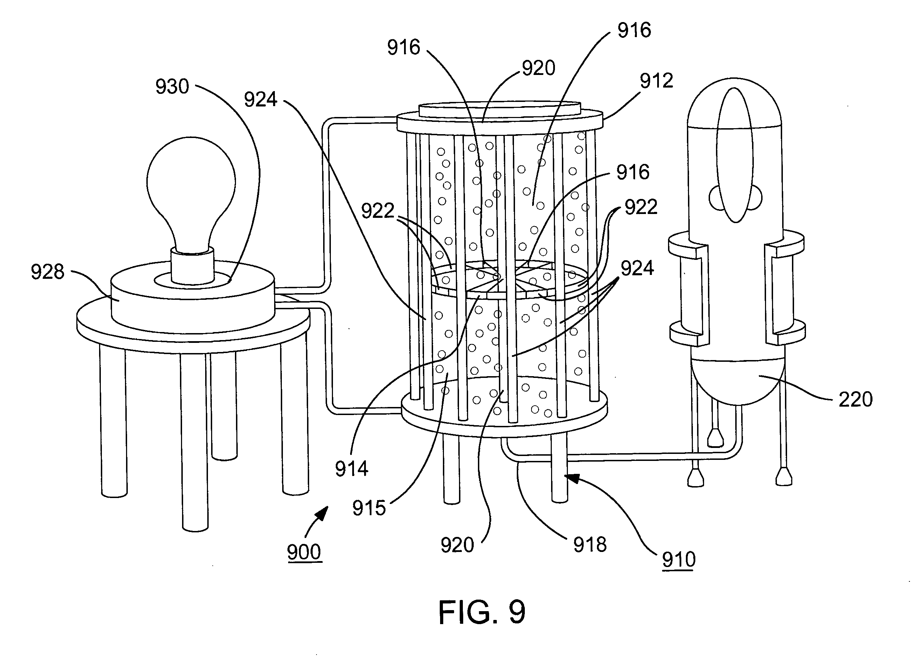

A system 900 for use with an apparatus 910 for generating electricity according to one or more embodiments of the disclosed subject matter is illustrated in FIG. 9. The apparatus 910 may be in communication with a low-density fluid injector 918 that is in further communication with the low-density fluid source 220. The apparatus 910 includes a chamber 912 that is configured for containing a fluid 915 therein. A shuttle 914 is provided within the fluid 915 and is configured for vertical buoyancy-dependent translation. The shuttle 914 defines a ring of magnets 922 that extend in a periphery about the inner diameter of the chamber 912. The ring of magnets 922 may be spaced apart from a central shaft 920 that extends from a lowermost to an uppermost position within the chamber 912 and may be coupled together by a plurality of blades 916 extending from the central shaft 920 to the ring of magnets 922. Each of the magnets 922 are configured for induction energy generation upon translation about induction coils 924 defined on a surface of the chamber 912. This induction may be caused by generally vertical translation of the magnets 922 about the induction coils 924, or may be alternatively caused by rotational translation of the magnets 922 about the induction coils 924 due to an angular relationship of the blades 916 relative to the central shaft 920. An energy generator 928 may be provided for converting induction energy into other forms of energy. An energy consuming device 930, illustrated as a light bulb in FIG. 9, may be provided in communication with the energy generator 918 for using generated energy.

The apparatus 910 is configured such that the shuttle 914 has a density that is less than or equal to the natural density of the fluid 915 contained within the chamber 912. As low-density fluid is injected into the chamber 912, the shuttle 914 will then begin to translate downwardly once the density of the fluid 915 is less than that of the shuttle 914. As the shuttle 914 translates downwardly, the induction energy is created by the passing of the magnets 922 by the coils 924. The central shaft 920 may be provided with a threaded portion for imparting rotational movement to the shuttle 914 as is translates vertically. Low-density fluid may continue to be injected into the chamber 912 until the shuttle 914 reaches a desired downward position. At that point, low-density fluid is no longer injected and the fluid 915 begins to return to its natural density. As this occurs, the shuttle 914 will begin to translate upwardly to its initial position. Once the shuttle 914 returns to its initial position, the low-density fluid injection process can be initiated again.

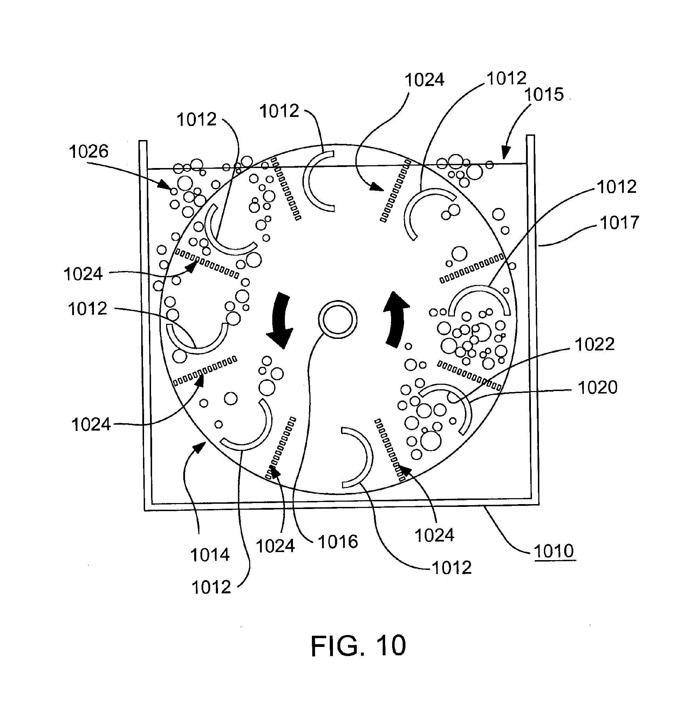

An apparatus for generating energy according to one or more embodiments of the disclosed subject matter is illustrated in FIG. 10 and is generally designated 1010. The apparatus is configured for being positioned in a body of fluid 1015 that is contained within a chamber 1017. The apparatus 1010 includes a plurality of radially spaced-apart paddles 1012 having a generally parabolic shape. The paddles 1012 are interconnected by a panel 1014. The panel 1014 is configured for pivotable movement about a pivot 1016. Each paddle 1012 generally defines a leading, concave portion 1020 and a trailing, convex portion 1022. A low-density fluid injector 1024 is defined medially between consecutively spaced-apart paddles 1012 for injecting low-density fluid therebetween. The low-density fluid 1026 injected from the low-density fluid injector 1024 rises upon injection. At this point, the low-density fluid 1026 is positioned proximal either the leading, concave portion 1020 or the trailing, convex portion 1022 of each paddle 1012. As illustrated in FIG. 10, one half of the paddles 1012 of the apparatus 1010 have low-density fluid 1026 on the leading, concave portion 1020 such that the reduction in density about those paddles 1022 will impart buoyancy-dependent translation in a counter-clockwise direction. The other half of the paddles 1012 of the apparatus have the low-density fluid 1026 acting to impart pressure on the trailing, convex portion 1022 of each paddle 1012 thereby imparting pressure induced translation of the paddles 1022 in a counter-clockwise direction. The apparatus 1010 may then further be coupled to an energy generator for generating energy according to known principles disclosed herein and known to those of ordinary skill in the art.

Alternatively, in one or more embodiments, an underground storage field may be utilized as a storage facility for storing compressed low-density fluid output from a power plant such as that depicted in FIGS. 3 and 4 in a process similar to Compressed Air Energy Storage (CAES). When used in conjunction with one of the energy generating systems or apparatuses disclosed herein, compressed gases and other fluids may be stored underground and then diverted to appropriate uses when desired.

It may also be suitable to utilize one of the systems or apparatuses disclosed herein on a continuous or on a select basis. For example, if utilizing the injection of low-density fluids, it may be appropriate to operate one of the systems or apparatuses disclosed herein on a continuous basis. In other circumstances, it may be desirable to utilize one of the systems or apparatuses only during peak energy consumption periods so as to increase the spot supply during those peak times. Accordingly, a control system may be implemented to monitor energy usage about the energy grid, and then command operation of one of the systems or apparatuses disclosed herein in response to monitoring.

In other embodiments, a recirculation and storage system may be utilized with any of the apparatuses disclosed herein for capturing spent low-density fluid after energy generation. This may be particularly advantageous for instances where carbon dioxide or other potentially unsafe low-density fluids are used. The captured low-density fluid could then be stored in an external storage tank, and optionally compressed for re-injection into one of the apparatuses disclosed herein.

While the embodiments have been described in connection with the preferred embodiments of the various figures, it is to be understood that other similar embodiments may be used or modifications and additions may be made to the described embodiment for performing the same function without deviating therefrom. Therefore, the disclosed embodiments should not be limited to any single embodiment, but rather should be construed in breadth and scope in accordance with the appended claims.

## Claims

1. An apparatus (310) comprising:
a first object (312) for being placed in a fluid having a first density;
an electricity generator (330) coupled to the first object (312) and configured for generating electricity in response to buoyancy-dependent translation of the first object (312); and
**characterized by**:
a gas injector (332) in communication with the fluid that alters the fluid by intermittently injecting gas into the fluid causing the altered fluid to have a second density that is less than the density of the first object (312) such that the first object undergoes buoyancy-dependent downward translation in the altered fluid and, when injection of the gas ceases, the first object (312) undergoes buoyancy-dependent upward translation as the fluid returns to the first density.

2. The apparatus of claim 1, wherein the electricity generator (330) is configured to generate electricity in response to the downward translation of the first object (312).

3. The apparatus of either one of claims 1 or 2, wherein the electricity generator (330) is further configured to generate electricity in response to the upward translation of the first object (312).

4. The apparatus according to any preceding claim, wherein the fluid defines a first portion and a second portion, and further wherein the first object (312) is placed in the first portion of the fluid.

5. The apparatus according to any preceding claim, wherein the first object is carried on a first end of a lever (316) that is coupled to a pivot (314).

6. The apparatus according to claim 5, wherein the electricity generator (330) is coupled to the pivot (314).

7. The apparatus according to either one of claims 5 or 6, further including a second object (432) that is carried on a second end of the lever (430), wherein the second object (432) is placed in the second portion of the fluid.

8. The apparatus according to any one of claims 4 to 7, wherein the first portion and the second portion are separated therebetween by a divider wall (334).

9. The apparatus according to claim 8, wherein a pivot (314) is carried by the divider wall (334).

10. The apparatus according to any preceding claim, wherein the electricity generator (330) is in communication with an energy storage device (250).

11. A method comprising:
placing a first object (312) in a first portion of fluid having a first density;
generating electricity in response to buoyancy-dependent translation of the first object (312); and
**characterized by**:
intermittently injecting gas into the first portion of fluid in order to reduce the density thereof to a second density that is less than the density of the first object (312) and thereby cause buoyancy-dependent downward translation of the first object (312) in response to the second density and, when injection of the gas ceases, cause buoyancy-dependent upward translation as the fluid returns to the first density.

12. The method according to claim 11, wherein placing a first object (312) in a first portion of fluid includes placing the first object (312) in a first position in the first portion of the fluid.

13. The method according to claim 12, wherein the buoyancy-dependent downward translation causes the first object (312) to move from a first position to a second position in the first portion of the fluid, and wherein generating electricity comprises generating electricity in response to the downward translation of the first object (312) from the first position to the second position.

14. The method according to either of claims 12 or 13, wherein the buoyancy-dependent upward translation causes the first object (312) to move from the second position to the first position, and wherein generating electricity comprises generating electricity upon the upward translation of the first object (312) from the second position to the first position.

## Patentansprüche

1. Vorrichtung (310), aufweisend:
ein erstens Objekt (312) zum Platzieren in einem Fluid mit einer ersten Dichte;
einen Elektrizitätsgenerator (330), der an das erste Objekt (312) gekoppelt und konfiguriert ist, um Elektrizität in Antwort auf eine auftriebsabhängige Translation des ersten Objekts (312) zu erzeugen; und
**gekennzeichnet durch**:
einen Gasinjektor (332), der in Kommunikation mit dem Fluid ist und das Fluid **durch** intermittierendes Injizieren von Gas in das Fluid verändert, was das veränderte Fluid veranlasst eine zweite Dichte aufzuweisen, die kleiner als die Dichte des ersten Objekts (312) ist, so das das erste Objekt auftriebsabhängige Abwärtstranslation in dem geänderten Fluid erfährt, wobei, wenn die Injektion des Gases endet, das erste Objekt (312) eine auftriebsabhängige Aufwärtstranslation erfährt, da das Fluid zur ersten Dichte zurückkehrt.

2. Vorrichtung gemäß Anspruch 1, wobei der Elektrizitätsgenerator (330) konfiguriert ist, Elektrizität in Antwort auf die Abwärtstranslation des ersten Objekts (312) zu erzeugen.

3. Vorrichtung gemäß einem der Ansprüche 1 oder 2, wobei der Elektrizitätsgenerator (330) ferner konfiguriert ist, Elektrizität in Antwort auf die Aufwärtstranslation des ersten Objekts (312) zu erzeugen.

4. Vorrichtung gemäß einem der vorhergehenden Ansprüche, wobei das Fluid einen ersten Abschnitt und einen zweiten Abschnitt definiert und wobei ferner das erste Objekt (312) in dem ersten Abschnitt des Fluids platziert ist.

5. Vorrichtung gemäß einem der vorhergehenden Ansprüche, wobei das erste Objekt auf einem ersten Ende eines Hebels (316) getragen wird, der an eine Achse (314) gekoppelt ist.

6. Vorrichtung gemäß Anspruch 5, wobei der Elektrizitätsgenerator (330) an die Achse (314) gekoppelt ist.

7. Vorrichtung gemäß einem der Ansprüche 5 oder 6, ferner ein zweites Objekt (432) beinhaltend, das auf einem zweiten Ende des Hebels (430) getragen wird, wobei das zweite Objekt (432) in dem zweiten Abschnitt des Fluids platziert ist.

8. Vorrichtung gemäß einem der Ansprüche 4 bis 7, wobei der erste Abschnitt und der zweite Abschnitt dazwischen durch eine Trennwand (334) separiert sind.

9. Vorrichtung gemäß Anspruch 8, wobei eine Achse (314) durch die Trennwand (334) getragen wird.

10. Vorrichtung gemäß einem der vorhergehenden Ansprüche, wobei der Elektrizitätsgenerator (330) in Kommunikation mit einer Energiespeichereinrichtung (250) ist.

11. Verfahren, umfassend:
Platzieren eines ersten Objekts (312) in einem ersten Abschnitt eines Fluids mit einer ersten Dichte;
Erzeugen von Elektrizität in Antwort auf eine auftriebsabhängige Translation des ersten Objekts (312); und
**gekennzeichnet, durch**:
intermittierendes Injizieren von Gas in den ersten Abschnitt des Fluids, um die Dichte desselben auf eine zweite Dichte zu reduzieren, die kleiner als die Dichte des ersten Objekts (312) ist, und dabei auftriebsabhängige Abwärtstranslation des ersten Objekts (312) in Antwort auf die zweite Dichte zu veranlassen, und wenn die Injektion des Gases endet, auftriebsabhängige Aufwärtstranslation zu veranlassen, da das Fluid zur ersten Dichte zurückkehrt.

12. Verfahren gemäß Anspruch 11, wobei Platzieren eines ersten Objekts (312) in einem ersten Abschnitt des Fluids Platzieren des ersten Objekts (312) an einer ersten Position in dem ersten Abschnitt des Fluids beinhaltet.

13. Verfahren gemäß Anspruch 12, wobei die auftriebsabhängige Abwärtstranslation das erste Objekt (312) veranlasst, sich von einer ersten Position zu einer zweiten Position in dem ersten Abschnitt des Fluids zu bewegen, und wobei Erzeugen von Elektrizität Erzeugen von Elektrizität in Antwort auf die Abwärtstranslation des ersten Objekts (312) von der ersten Position zur zweiten Position umfasst.

14. Verfahren gemäß einem der Ansprüche 12 oder 13, wobei die auftriebsabhängige Aufwärtstranslation das erste Objekt (312) veranlasst, sich von der zweiten Position zur ersten Position zu bewegen, und wobei Erzeugen von Elektrizität Erzeugen von Elektrizität ausgehend von der Aufwärtstranslation des ersten Objekts (312) von der zweiten Position zur ersten Position umfasst.

## Revendications

1. Dispositif (310) comprenant :
un premier objet (312) destiné à être placé dans un fluide ayant une première densité ;
un générateur d'électricité (330) couplé au premier objet (312) et configuré pour générer de l'électricité en réponse à une translation dépendante de la flottabilité du premier objet (312) ; et
**caractérisé par** :
un injecteur de gaz (332) en communication avec le fluide qui altère le fluide en injectant par intermittence du gaz dans le fluide en forçant le fluide altéré à avoir une deuxième densité qui est inférieure à la densité du premier objet (312) de manière que le premier objet subisse une translation vers le bas dépendante de la flottabilité dans le fluide altéré et, quand l'injection du gaz cesse, que le premier objet (312) subisse une translation vers le haut dépendante de la flottabilité lorsque le fluide revient à la première densité.

2. Dispositif selon la revendication 1, dans lequel le générateur d'électricité (330) est configuré pour générer de l'électricité en réponse à la translation vers le bas du premier objet (312).

3. Dispositif selon une ou l'autre des revendications 1 ou 2, dans lequel le générateur d'électricité (330) est configuré en outre pour générer de l'électricité en réponse à la translation vers le haut du premier objet (312).

4. Dispositif selon une quelconque revendication précédente, dans lequel le fluide définit une première portion et une deuxième portion et dans lequel en outre le premier objet (312) est placé dans la première portion du fluide.

5. Dispositif selon une quelconque revendication précédente, dans lequel le premier objet est supporté sur une première extrémité d'un levier (316) qui est couplé à un pivot (314).

6. Dispositif selon la revendication 5, dans lequel le générateur d'électricité (330) est couplé au pivot (314).

7. Dispositif selon une ou l'autre des revendications 5 ou 6, comprenant en outre un deuxième objet (432) qui est supporté sur une deuxième extrémité du levier (430), dans lequel le deuxième objet (432) est placé dans la deuxième portion du fluide.

8. Dispositif selon l'une quelconque des revendications 4 à 7, dans lequel la première portion et la deuxième portion sont séparées entre elles par une paroi de séparation (334).

9. Dispositif selon la revendication 8, dans lequel un pivot (314) est supporté par la paroi de séparation (334).

10. Dispositif selon une quelconque revendication précédente, dans lequel le générateur d'électricité (330) est en communication avec un dispositif de stockage d'énergie (250).

11. Procédé comprenant :
le placement d'un premier objet (312) dans une première portion de fluide ayant une première densité ;
la génération d'électricité en réponse à une translation dépendante de la flottabilité du premier objet (312) ; et
**caractérisé par** :
l'injection de gaz par intermittence dans la première portion de fluide afin de réduire sa densité à une deuxième densité qui est inférieure à la densité du premier objet (312) et provoquer ainsi une translation vers le bas dépendante de la flottabilité du premier objet (312) en réponse à la deuxième densité et, quand l'injection du gaz cesse,
provoquer une translation vers le haut dépendante de la flottabilité lorsque le fluide revient à la première densité.

12. Procédé selon la revendication 11, dans lequel le placement du premier objet (312) dans une première portion de fluide comprend le placement du premier objet (312) dans une première position dans la première portion du fluide.

13. Procédé selon la revendication 12, dans lequel la translation vers le bas dépendante de la flottabilité force le premier objet (312) à se déplacer d'une première position à une deuxième position dans la première portion du fluide, et dans lequel la génération d'électricité comprend la génération d'électricité en réponse à la translation vers le bas du premier objet (312) de la première position à la deuxième position.

14. Procédé selon une ou l'autre des revendications 12 ou 13, dans lequel la translation vers le haut dépendante de la flottabilité force le premier objet (312) à se déplacer de la deuxième position à la première position, et dans lequel la génération d'électricité comprend la génération d'électricité en réponse à la translation vers le haut du premier objet (312) de la deuxième position à la première position.
